# EUROPÄISCHE PATENTSCHRIFT

(11) **EP 3 588 994 B1**
(45) Veröffentlichungstag und Bekanntmachung des Hinweises auf die Patenterteilung: **02.08.2023**
(21) Anmeldenummer: 18180671.2
(22) Anmeldetag: 29.06.2018
(51) Int. Cl.: H04W 4/08, H04W 4/10, H04W 76/40, H04W 76/45, H04L 65/4061, H04M 3/54, H04W 4/021, H04W 4/02, H04W 4/12, H04M 1/72412, G10L 15/08, G06Q 50/02, A01G 23/00, A01G 23/08

(54) **VERFAHREN ZUM BEGRIFFSABHÄNGIGEN AUSGEBEN EINER AUF EINER SPRACHEINGABE BASIERENDEN INFORMATION UND SYSTEM**
METHOD FOR TERM-DEPENDENT OUTPUT OF INFORMATION BASED ON SPEECH INPUT AND SYSTEM
PROCÉDÉ DE FOURNITURE D'UNE INFORMATION DÉPENDANTE DE L'EXPRESSION BASÉE SUR UNE ENTRÉE VOCALE ET SYSTÈME

(43) Veröffentlichungstag der Anmeldung: 01.01.2020
(73) Patentinhaber: Andreas Stihl AG & Co. KG, 71336 Waiblingen (DE)
(72) Erfinder: REINERT, Michael, 73635 Rudersberg (DE); TIPPELT, Martin, 71111 Waldenbuch (DE); MANG, Harald, 71364 Winnenden (DE)
(74) Vertreter: Patentanwälte Ruff, Wilhelm, Beier, Dauster & Partner mbB

(56) Entgegenhaltungen:
- WO-A1-03/073642
- WO-A1-2016/210007
- WO-A1-2017/074106
- WO-A1-2017/137083
- DE-A1-102008 037 690
- US-A1- 2005 170 856
- US-A1- 2007 047 479
- US-A1- 2011 142 221
- US-A1- 2014 087 780
- US-A1- 2014 253 326
- US-A1- 2015 373 450
- US-A1- 2018 103 359
- US-A1- 2018 115 877

## Beschreibung

Die Erfindung bezieht sich auf ein Verfahren zum begriffsabhängigen Ausgeben einer auf einer Spracheingabe basierenden Information an eine spezifische Gruppe und ein System zum begriffsabhängigen Ausgeben einer auf einer Spracheingabe basierenden Information an eine spezifische Gruppe.

Die US 2018/0103359 A1 offenbart Systeme, Verfahren und Software zum Bereitstellen von Weiterentwicklungen für einen Sprach-Kommunikations-Service zum Weiterleiten von Kommunikation zu einem zweiten Service. In einer Ausführung weist ein Verfahren zum Betreiben eines Gruppen-Kommunikations-Service, der Sprach-Kommunikationen für eine Gruppe von End-Nutzer-Geräten ermöglicht, Austauschen von Sprach-Kommunikationen zwischen der Gruppe von End-Nutzer-Geräten auf, wobei die Gruppe von End-Nutzer-Geräten ein erstes End-Nutzer-Gerät und mindestens ein zweites End-Nutzer-Gerät aufweist. Das Verfahren stellt weiter ein Identifizieren in einer Sprach-Kommunikation von dem ersten End-Nutzer-Gerät einer Nutzung einer Schlüssel-Phrase und als Reaktion zu dem Identifizieren der Schlüssel-Phrase ein Weiterleiten mindestens eines Teils der Sprach-Kommunikation zu einem zweiten Service bereit.

Die US 2014/0087780 A1 offenbart eine Übertragung eines Notfalls aufweisend Verbrechen in einem Nachbarschafts-Sozialen-Netzwerk.

Die US 2018/0115877 A1 offenbart ein zwischen-Plattform-multi-direktionales Kommunikationssystem und -verfahren.

Die WO 2017/074106 A1 offenbart ein Verfahren und ein Gerät für eine Gruppen-Kommunikation.

Der Erfindung liegt als Aufgabe die Bereitstellung eines Verfahrens zum Ausgeben einer auf einer Spracheingabe basierenden Information an eine Gruppe und eines Systems zum Ausgeben einer auf einer Spracheingabe basierenden Information an eine Gruppe zugrunde, das jeweils verbesserte Eigenschaften aufweist, insbesondere mehr Funktionalitäten, und/oder benutzerfreundlich ist.

Die Erfindung löst die Aufgabe durch die Bereitstellung eines Verfahrens mit den Merkmalen des Anspruchs 1. Des Weiteren wird die der Erfindung zugrundeliegende Aufgabe durch ein System mit den Merkmalen des Anspruchs 8 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum begriffsabhängigen Ausgeben einer auf einer Spracheingabe basierenden Information an eine spezifische Gruppe, weist die Schritte auf: a) Erfassen, insbesondere automatisches Erfassen, der Spracheingabe. b) Analysieren, insbesondere automatisches Analysieren, der erfassten Spracheingabe auf Vorhandensein eines gruppenspezifischen Schlüsselbegriffs, welcher der spezifischen Gruppe, insbesondere logisch, zugeordnet ist. c) bei Erkennung beziehungsweise Vorhandensein des gruppenspezifischen Schlüsselbegriffs in der analysierten Spracheingabe Ausgeben, insbesondere automatisches Ausgeben, der auf der Spracheingabe basierenden Information an die spezifische Gruppe.

Das Verfahren ermöglicht, dass die Information an die spezifische Gruppe ausgegeben wird, insbesondere ohne dass ein Benutzer beziehungsweise Sprecher, insbesondere von welchem die Spracheingabe gesprochen werden oder sein kann, durch händische Betätigung die spezifische Gruppe hierzu auszuwählen braucht. Somit ist das Verfahren benutzerfreundlich. Insbesondere kann das Verfahren ermöglichen, dass der Benutzer beziehungsweise Sprecher seine Hände für eine andere Aufgabe frei haben kann, insbesondere gleichzeitig mit beziehungsweise während der Spracheingabe.

Insbesondere kann die Information nur beziehungsweise ausschließlich für die spezifische Gruppe relevant, insbesondere bestimmt, sein. Das Ausgeben der Information an die spezifische Gruppe kann als selektives Ausgeben bezeichnet werden. In anderen Worten: die Information braucht nicht an eine andere Gruppe, welcher der gruppenspezifische Schlüsselbegriff nicht zugeordnet ist, ausgegeben zu werden. Somit braucht die andere Gruppe nicht unnötigerweise, insbesondere mit der für sie nicht relevanten Information, belästigt zu werden.

Bei Nicht-Vorhandensein beziehungsweise Nicht-Erkennung eines gruppenspezifischen Schlüsselbegriffs in der Spracheingabe braucht keine Information, insbesondere an die spezifische Gruppe, ausgeben zu werden.

Es kann eine Mindestlautstärke vorgegeben sein, die ein erfasstes Geräusch erreichen muss, um als Spracheingabe zu gelten. Zusätzlich oder alternativ kann das Erfassen der Spracheingabe durch einen Befehl, insbesondere einen Sprachbefehl, gesteuert beziehungsweise aktiviert beziehungsweise ausgelöst werden.

Insbesondere kann stets beziehungsweise andauernd beziehungsweise ununterbrochen erfasst werden beziehungsweise überwacht sein, ob die Spracheingabe und gegebenenfalls der Sprachbefehl, soweit vorgesehen, erfolgt. Anders formuliert: es kann gelauscht werden, ob ein Geräusch, insbesondere mit der vorgegebenen Mindestlautstärke, vorhanden ist. In anderen Worten: jede Spracheingabe kann erfasst werden.

Die Spracheingabe kann ein Wort oder eine Silbe oder einen Laut aufweisen oder sein.

Die Spracheingabe und gegebenenfalls der Sprachbefehl, soweit vorgesehen, kann/können von dem Benutzer beziehungsweise Sprecher gesprochen werden oder sein.

Der gruppenspezifische Schlüsselbegriff kann eine Bezeichnung für die spezifische Gruppe oder ein von der spezifischen Gruppenbezeichnung verschiedener Begriff sein, der im Kontext zu der spezifischen Gruppe beziehungsweise mindestens einer spezifischen Eigenschaft der spezifischen Gruppe stehen kann.

Insbesondere kann die Spracheingabe mehrere verschiedene gruppenspezifische Schlüsselbegriffe aufweisen. Jeder einzelne gruppenspezifische Schlüsselbegriff kann einer einzelnen spezifischen Gruppe oder mehreren, voneinander verschiedenen spezifischen Gruppen zugeordnet sein. Insbesondere kann ein erster gruppenspezifischer Schlüsselbegriff einer ersten spezifischen Gruppe zugeordnet sein und/oder ein zweiter gruppenspezifischer Schlüsselbegriff kann einer von der ersten verschiedenen, zweiten spezifischen Gruppe zugeordnet sein. Zusätzlich oder alternativ kann ein dritter gruppenspezifischer Schlüsselbegriff sowohl der ersten spezifischen Gruppe als auch der zweiten spezifischen Gruppe zugeordnet sein.

Die spezifische Gruppe kann ein einzelnes oder mehrere Gruppenmitglied/er aufweisen. Ein Gruppenmitglied kann eine natürliche Person beziehungsweise ein Mensch oder ein Gerät, insbesondere ein Computer oder ein Speicher, insbesondere zum Speichern der auf der Spracheingabe basierenden Information, wie beispielsweise ein Cloudspeicher, oder eine Maschine, sein. Ein Gruppenmitglied, insbesondere eine natürliche Person, kann Mitglied in mehreren, voneinander verschiedenen spezifischen Gruppen sein. Insbesondere kann ein Gruppenmitglied Mitglied der ersten spezifischen Gruppe und Mitglied der zweiten spezifischen Gruppe sein.

Des Weiteren kann die spezifische Gruppe dadurch definiert sein, dass mindestens ein Gruppenmitglied der spezifischen Gruppe eine Handlung oder Tätigkeit, auf welche die Spracheingabe und/oder die Information hinweist, ausführen kann. Der gruppenspezifische Schlüsselbegriff kann ein Handlungsbegriff oder ein Tätigkeitsbegriff sein. Insbesondere kann eine aktuelle Handlung oder Tätigkeit, insbesondere einer natürlichen Person beziehungsweise eines Menschen, detektiert werden. Basierend auf der detektierten Handlung kann die natürliche Person der spezifischen Gruppe zugeordnet beziehungsweise zugewiesen werden, insbesondere kann eine Umgruppierung beziehungsweise ein Gruppenwechsel stattfinden.

Die Information kann die Spracheingabe selbst aufweisen oder sein. Zusätzlich oder alternativ kann die Information basierend auf beziehungsweise in Abhängigkeit von der Spracheingabe, insbesondere durch Weiterverarbeiten der Spracheingabe, ermittelt werden und/oder die Spracheingabe kann ergänzt werden, insbesondere automatisch. Insbesondere kann die ausgegebene Information die spezifische Gruppe über eine auszuführende Handlung oder Tätigkeit informieren.

Der Schritt b) kann zeitgleich mit dem Schritt a) und/oder zeitlich nach diesem ausgeführt werden. Der Schritt c) kann zeitgleich mit dem Schritt b) und/oder zeitlich nach diesem ausgeführt werden.

Das Verfahren kann für mindestens eine weitere Spracheingabe, insbesondere mehrfach, wiederholt werden.

Das Verfahren weist die Schritte auf: Ermitteln, insbesondere automatisches Ermitteln, einer Entfernung beziehungsweise eines Abstands zwischen einem Erfassungsort und einem Ausgabeort und bei Unterschreitung eines Entfernungsgrenzwerts durch die ermittelte Entfernung gruppenunspezifisches Ausgeben, insbesondere automatisches Ausgeben, der Information. Insbesondere kann die Information, obwohl an sich nur für die spezifische Gruppe relevant, in einer gewissen Nähe zum Erfassungsort auch für Nichtmitglieder der spezifischen Gruppe relevant sein oder werden. Das gruppenunspezifische Ausgeben bei Unterschreitung des Entfernungsgrenzwerts ermöglicht, die Information gruppenunabängig zu erfahren beziehungsweise mitzubekommen. Insbesondere kann der Erfassungsort ein Ort beziehungsweise eine Position sein, an welchem beziehungsweise welcher die Spracheingabe erfasst wird und/oder worden ist. Der Ausgabeort kann ein Ort beziehungsweise eine Position sein, an welchem beziehungsweise welcher die Information möglicherweise ausgegeben werden könnte. Der Entfernungsgrenzwert kann einen Wert aufweisen, der einer typischen Höhe eines Baums ohne oder zuzüglich eines Sicherheitsfaktors, insbesondere von 50 Prozent (%) oder 100 %, und/oder der einem typischen Radius eines Handlungsbereichs beziehungsweise eines Tätigkeitsbereichs des Benutzers beziehungsweise Sprechers entspricht. Die Information kann die ermittelte Entfernung aufweisen. Insbesondere kann die Entfernung einen Wert und/oder einen Betrag aufweisen. Zusätzlich oder alternativ kann bei Nicht-Unterschreitung, insbesondere bei Überschreitung, des Entfernungsgrenzwerts durch die ermittelte Entfernung die Information nur beziehungsweise ausschließlich gruppenspezifisch ausgegeben werden. Weiter zusätzlich oder alternativ kann eine Richtung von dem Ausgabeort zu dem Erfassungsort ermittelt werden und, wenn die ermittelte Richtung in einem, insbesondere definierten, Richtungsbereich liegt, kann die Information gruppenunspezifisch ausgegeben werden. Wenn die ermittelte Richtung nicht in dem Richtungsbereich liegt, kann die Information nur beziehungsweise ausschließlich gruppenspezifisch ausgegeben werden.

Der Entfernungsgrenzwert liegt in einem Bereich von 30 Meter (m) bis 150 m.

In einer Weiterbildung der Erfindung ist die spezifische Gruppe eine Garten- und/oder Forstarbeitergruppe, insbesondere eine Fällgruppe, und der gruppenspezifische Schlüsselbegriff ist ein Garten- und/oder Forstbegriff, insbesondere ein Fällbegriff. Beispielsweise kann der Fällbegriff "Baum fällt" und/oder "Alle weg der kommt"sein. Bei Erkennung des Fällbegriffs kann die Fällgruppe durch Ausgeben der Information erfahren, dass ein Baum und/oder wo der Baum fällt und somit auf den Baum zu achten ist und/oder dass der gefällte Baum zu entasten ist. Zusätzlich oder alternativ kann der Fällbegriff "Baum hängt" sein. Bei Erkennung des Fällbegriffs kann die Fällgruppe durch Ausgeben der Information erfahren, dass ein Baum und/oder wo der Baum hängt und somit auf den Baum zu achten ist und/oder dass der hängende Baum zu beseitigen ist, insbesondere zu schleppen. Ein Gruppenmitglied der Garten- und/oder Forstarbeitergruppe, insbesondere der Fällgruppe, kann ein Garten- und/oder Forstarbeiter, insbesondere ein Fällarbeiter, und/oder ein Bediener, insbesondere ein Fahrer, eines Schleppfahrzeugs, insbesondere eines Unfallverhütungsvorschrift-Schleppers und/oder eines Harvesters, sein.

Zusätzlich oder alternativ ist die spezifische Gruppe eine Rückergruppe und der gruppenspezifische Schlüsselbegriff ist ein Rückerbegriff. Beispielsweise kann der Rückerbegriff "Baum rücken" sein. Bei Erkennung des Rückerbegriffs kann die Rückergruppe durch Ausgeben der Information erfahren, dass ein Baum und/oder wo der Baum zu rücken ist. Ein Gruppenmitglied der Rückergruppe kann ein Bediener, insbesondere ein Fahrer, eines Rückfahrzeugs, insbesondere eines Schleppkrans und/oder eines Traktors und/oder eines Forwarders und/oder eines Harvesters, sein.

Zusätzlich oder alternativ ist die spezifische Gruppe eine Forst- und/oder Arbeitsverwaltungsgruppe und der gruppenspezifische Schlüsselbegriff ist ein Forst- und/oder Arbeitsverwaltungsbegriff. Beispielsweise kann der Forst- und/oder Arbeitsverwaltungsbegriff "Baum gefällt und gerückt" sein. Bei Erkennung des Forst- und/oder Arbeitsverwaltungsbegriff kann die Forst- und/oder Arbeitsverwaltungsgruppe durch Ausgeben der Information erfahren, dass ein Baum und/oder welcher Baum als gefällt und gerückt, insbesondere im Arbeitsplan, zu kennzeichnen ist. Zusätzlich oder alternativ kann der Forst- und/oder Arbeitsverwaltungsbegriff ein Holzdatenbegriff sein, wie beispielsweise "Mittendurchmesser", "Länge", "Holzart", und/oder "Holzqualität", insbesondere während einer Aufarbeitung eines gefällten Baums. Bei Erkennung des/der Forst- und/oder Arbeitsverwaltungsbegriff/e kann die Forst- und/oder Arbeitsverwaltungsgruppe durch Ausgeben der Information die Holzdaten erfahren, insbesondere speichern. Ein Gruppenmitglied der Forst- und/oder Arbeitsverwaltungsgruppe kann ein Forstmeister und/oder ein Auftragsverwalter und/oder ein Auftraggeber und/oder ein Forst-Unternehmer sein.

Zusätzlich oder alternativ ist die spezifische Gruppe eine Rettungsgruppe und der gruppenspezifische Schlüsselbegriff ist ein Notfallbegriff und/oder ein Rettungsbegriff. Beispielsweise kann der Notfallbegriff und/oder der Rettungsbegriff "Hilfe" sein. Bei Erkennung des Notfallbegriffs und/oder des Rettungsbegriffs kann die Rettungsgruppe durch Ausgeben der Information erfahren, dass ein Notfall beziehungsweise ein Unfall und/oder wo der Notfall eingetreten ist und/oder dass der Benutzer beziehungsweise Sprecher Hilfe, insbesondere erste beziehungsweise medizinische Hilfe, benötigt. Ein Gruppenmitglied der Rettungsgruppe kann ein Retter, insbesondere ein Ersthelfer, sein.

In einer Weiterbildung der Erfindung weist das Verfahren den Schritt auf: Ermitteln, insbesondere automatisches Ermitteln, einer, insbesondere der, Richtung von einem, insbesondere dem, Ausgabeort zu einem, insbesondere dem, Erfassungsort. Die Information weist die ermittelte Richtung auf. Dies ermöglicht zu erfahren, in welcher Richtung der Erfassungsort in Bezug auf den Ausgabeort liegt. Insbesondere kann der Erfassungsort ein Ort beziehungsweise eine Position sein, an welchem beziehungsweise welcher die Spracheingabe erfasst wird und/oder worden ist. Der Ausgabeort kann ein Ort beziehungsweise eine Position sein, an welchem beziehungsweise welcher die Information ausgegeben wird. Die Richtung kann eine Himmelsrichtung und/oder eine Route aufweisen oder sein. Insbesondere kann die Richtung einen Wert und/oder einen Betrag aufweisen. Insbesondere kann die Richtung aus einer Differenz von Positionskoordinaten des Erfassungsorts und von Positionskoordinaten des Ausgabeorts ermittelt werden. Die Positionskoordinaten können mittels eines lokalen Positionsbestimmungssystems und/oder eines Satelliten-Positionsbestimmungssystems ermittelt werden.

In einer Ausgestaltung der Erfindung wird die Entfernung mittels eines Laufzeitverfahrens, insbesondere einer Laufzeitmessung eines Funksignals, ermittelt. Insbesondere kann ein Signal zwischen dem Erfassungsort und dem Ausgabeort ausgetauscht werden und basierend auf dem ausgetauschten Signal die Entfernung ermittelt werden.

Zusätzlich oder alternativ kann die Entfernung aus einer Differenz von Positionskoordinaten des Erfassungsorts und von Positionskoordinaten des Ausgabeorts ermittelt werden. Die Positionskoordinaten können mittels eines lokalen Positionsbestimmungssystems und/oder eines Satelliten-Positionsbestimmungssystems ermittelt werden.

In einer Weiterbildung der Erfindung weist das Verfahren den Schritt auf: drahtloses beziehungsweise kabelloses Übertragen, insbesondere automatisches Übertagen, der erfassten Spracheingabe und/oder der Information, insbesondere von einem Erfassungsort an einen Ausgabeort. Insbesondere kann mittels eines Funksignals, insbesondere eines Bluetooth-Signals und/oder eines WLAN-Signals und/oder eines Mobilfunk-Signals und/oder eines Satellitenfunk-Signals, übertragen werden. Zusätzlich kann ein Übertragungssignal, insbesondere das Funksignal, zur Richtungsermittlung und/oder zur Entfernungsermittlung, insbesondere mittels des Laufzeitverfahrens, soweit vorgesehen, verwendet beziehungsweise genutzt werden.

In einer Weiterbildung der Erfindung wird im Schritt c) die Information akustisch und/oder optisch und/oder haptisch ausgegeben. Dies kann eine relativ gute Wahrnehmung der Information ermöglichen. Insbesondere kann das optische Ausgeben ein Anzeigen aufweisen oder sein. Das optische Ausgeben kann ein Projizieren beziehungsweise ein Einblenden in ein Sichtfeld, insbesondere einer natürlichen Person, aufweisen. Das haptische Ausgeben kann ein Vibrieren aufweisen.

In einer Weiterbildung der Erfindung weist das Verfahren den Schritt auf: d) Ausgeben, insbesondere automatisches Ausgeben, einer auf der ausgegeben Information basierenden weiteren Information an einen, insbesondere den, Sprecher der Spracheingabe und/oder an einem, insbesondere dem, Erfassungsort. Insbesondere kann die weitere Information basierend auf beziehungsweise in Abhängigkeit von der ausgegebenen Information, insbesondere durch Weiterverarbeiten der ausgegeben Information, ermittelt werden, insbesondere automatisch und/oder durch die spezifische Gruppe. Beispielsweise kann bei Ausgeben der Information, insbesondere der Spracheingabe, "Baum rücken" an die Rückergruppe die weitere Information "Rückfahrzeug unbesetzt" sein, insbesondere wenn das Rückfahrzeug unbesetzt ist. Der Sprecher der Spracheingabe kann durch Ausgeben der weiteren Information erfahren, dass das Rückfahrzeug unbesetzt ist. Zusätzlich oder alternativ kann bei Ausgeben der Information in Form von Holzdaten an die Forst- und/oder Arbeitsverwaltungsgruppe die weitere Information eine Arbeitsanweisung sein, wie beispielsweise eine Sortimentsaushaltung. Der Sprecher der Spracheingabe, insbesondere ein Gruppenmitglied der Garten- und/oder Forstarbeitergruppe, kann durch Ausgeben der weiteren Information erfahren, wie ein Baum zu bearbeiten ist. Weiter zusätzlich oder alternativ kann bei Ausgeben der Information "Hilfe" an die Rettungsgruppe die weitere Information ein Sicherheitshinweis sein, wie beispielsweise ein Rettungspunkt. Der Sprecher der Spracheingabe kann durch Ausgeben der weiteren Information erfahren, wie und/oder wo er Hilfe bekommen kann. Insbesondere kann die weitere Information als Reaktion, insbesondere Antwort, bezeichnet werden. Weiter zusätzlich oder alternativ kann die weitere Information von einem, insbesondere dem, Ausgabeort an den Erfassungsort drahtlos beziehungsweise kabellos übertragen werden. Weiter zusätzlich oder alternativ kann der Erfassungsort ein Ort beziehungsweise eine Position sein, an welchem beziehungsweise welcher die Spracheingabe erfasst wird und/oder worden ist. Weiter zusätzlich oder alternativ kann der Ausgabeort ein Ort beziehungsweise eine Position sein, an welchem beziehungsweise welcher die Information ausgegeben wird und/oder worden ist. Weiter zusätzlich oder alternativ kann im Schritt d) die Information akustisch und/oder optisch und/oder haptisch ausgegeben werden. Weiter zusätzlich oder alternativ kann der Schritt d) zeitgleich mit dem Schritt c) und/oder zeitlich nach diesem ausgeführt werden.

Des Weiteren bezieht sich die Erfindung auf ein, insbesondere elektrisches, System zum begriffsabhängigen Ausgeben einer auf einer Spracheingabe basierenden Information an eine spezifische Gruppe. Das System kann insbesondere zum Ausführen des zuvor beschriebenen Verfahrens ausgebildet sein. Das erfindungsgemäße System weist mindestens eine, insbesondere elektrische, Erfassungseinrichtung, mindestens eine, insbesondere elektrische, Analyseeinrichtung und mindestens eine, insbesondere elektrische, Ausgabeeinrichtung auf. Die mindestens eine Erfassungseinrichtung ist dazu ausgebildet, die Spracheingabe zu erfassen. Die mindestens eine Analyseeinrichtung ist dazu ausgebildet, die erfasste Spracheingabe auf Vorhandensein eines gruppenspezifischen Schlüsselbegriffs zu analysieren, welcher der spezifischen Gruppe, insbesondere logisch, zugeordnet ist. Die mindestens eine Ausgabeeinrichtung ist dazu ausgebildet, bei Erkennung beziehungsweise Vorhandensein des gruppenspezifischen Schlüsselbegriffs in der analysierten Spracheingabe, insbesondere durch die Analyseeinrichtung, die auf der Spracheingabe basierende Information an die spezifische Gruppe auszugeben.

Das System kann die gleichen Vorteile ermöglichen wie das zuvor beschriebene Verfahren.

Die Erfassungseinrichtung und die Analyseeinrichtung können gemeinsam ausgebildet sein. Alternativ können die Analyseeinrichtung und die Ausgabeeinrichtung gemeinsam ausgebildet sein. Zusätzlich oder alternativ kann die Ausgabeeinrichtung getrennt von der Erfassungseinrichtung ausgebildet sein.

Das System beziehungsweise seine Erfassungseinrichtung kann zur Steuerung beziehungsweise Aktivierung beziehungsweise Auslösung durch einen Befehl, insbesondere einen Sprachbefehl, zum Erfassen der Spracheingabe ausgebildet sein.

Die Analyseeinrichtung kann einen Prozessor, insbesondere eine CPU, aufweisen oder sein. Des Weiteren kann die Analyseeinrichtung einen, insbesondere elektronischen und/oder magnetischen und/oder optischen, Speicher, insbesondere einen Halbleiterspeicher oder ein Festplattenlaufwerk, aufweisen oder sein. Insbesondere kann die Analyseeinrichtung dazu ausgebildet sein, die Zuordnung des gruppenspezifischen Schlüsselbegriffs zu der spezifischen Gruppe, zu speichern, insbesondere einmalig vorab vor Ausführen des zuvor beschriebenen Verfahrens.

Die Ausgabeeinrichtung kann dazu ausgebildet sein, der spezifischen Gruppe zugeordnet zu sein oder zu werden, insbesondere durch eine Benutzerbetätigung, insbesondere mittels einer Drucktaste und/oder einem Drehsteller. Insbesondere kann die Ausgabeeinrichtung einen, insbesondere elektronischen und/oder magnetischen und/oder optischen, Speicher, insbesondere einen Halbleiterspeicher oder ein Festplattenlaufwerk, aufweisen oder sein. Insbesondere kann die Ausgabeeinrichtung dazu ausgebildet sein, die Zuordnung zu der spezifischen Gruppe, zu speichern, insbesondere einmalig vorab vor Ausführen des zuvor beschriebenen Verfahrens.

Das System kann ein Smartphone aufweisen. Die Erfassungseinrichtung und/oder die Analyseeinrichtung und/oder die Ausgabeeinrichtung können/kann an dem Smartphone angeordnet sein, insbesondere befestigt, insbesondere integriert.

Das System weist ein, insbesondere elektrisches, Entfernungsermittlungssystem auf, das dazu ausgebildet ist, eine Entfernung zwischen der Erfassungseinrichtung und der Ausgabeeinrichtung zu ermitteln. Die Ausgabeeinrichtung ist dazu ausgebildet, bei Unterschreitung eines Entfernungsgrenzwerts durch die ermittelte Entfernung die Information gruppenunspezifisch auszugeben. Insbesondere kann das Entfernungsermittlungssystem dazu ausgebildet sein, die Entfernung zwischen der Erfassungseinrichtung und der Ausgabeeinrichtung mittels eines Laufzeitverfahrens und/oder aus einer Differenz von Positionskoordinaten der Erfassungseinrichtung und von Positionskoordinaten der Ausgabeeinrichtung zu ermitteln. Das Entfernungsermittlungssystem kann mindestens ein lokales Positionsbestimmungssystem und/oder mindestens ein Satelliten-Positionsbestimmungssystems zum Ermitteln von Positionskoordinaten aufweisen. Zusätzlich oder alternativ kann die Ausgabeeinrichtung dazu ausgebildet sein, bei Nicht-Unterschreitung, insbesondere bei Überschreitung, des Entfernungsgrenzwerts durch die ermittelte Entfernung die Information nur beziehungsweise ausschließlich gruppenspezifisch auszugeben.

Der Entfernungsgrenzwert liegt in einem Bereich von 30 Meter (m) bis 150 m.

In einer Weiterbildung der Erfindung sind/ist die Erfassungseinrichtung und/oder die Analyseeinrichtung und/oder die Ausgabeeinrichtung mobil ausgebildet. Dies ermöglicht ein einfaches Mitführen. Insbesondere kann mobil als portabel oder körpergeführt, insbesondere körpergetragen, oder handgeführt, insbesondere handgetragen, bezeichnet werden. Mobil kann bedeuten, dass die entsprechende Einrichtung eine maximale Masse von 10 Kilogramm (kg), insbesondere von 5 kg, insbesondere von 2 kg, insbesondere von 1 kg, insbesondere von 0,5 kg, insbesondere von 0,2 kg, insbesondere von 0,1 kg, insbesondere von 0,05 kg, aufweisen kann.

In einer Ausgestaltung der Erfindung weist das System mindestens einen Schutzhelm und/oder einen Gehörschutz und/oder einen Gesichtsschutz und/oder eine Schutzbrille und/oder einen Schutzhandschuh und/oder eine Smartwatch und/oder ein Armband und/oder einen Armreif und/oder ein Headset auf. Die Erfassungseinrichtung und/oder die Analyseeinrichtung und/oder die Ausgabeeinrichtung sind/ist an dem Schutzhelm und/oder dem Gehörschutz und/oder dem Gesichtsschutz und/oder der Schutzbrille und/oder dem Schutzhandschuh und/oder der Smartwatch und/oder dem Armband und/oder dem Armreif und/oder dem Headset angeordnet, insbesondere befestigt, insbesondere integriert. Dies ermöglicht das Tragen am Körper, insbesondere eines Gruppenmitglieds.

Zusätzlich oder alternativ können/kann die Erfassungseinrichtung und/oder die Analyseeinrichtung und/oder die Ausgabeeinrichtung dazu ausgebildet sein, an einem, insbesondere mobilen, Werkzeug, insbesondere einem Garten- und/oder Forstgerät, angeordnet beziehungsweise befestigt zu werden oder zu sein, insbesondere lösbar, und/oder in das Werkzeug integriert zu sein. Insbesondere kann das Werkzeug zum, insbesondere haptischen, Ausgeben der Information ausgebildet sein, beispielsweise durch eine reduzierte Drehzahl und/oder ein gezieltes Austaktmuster.

In einer Weiterbildung der Erfindung weist die Erfassungseinrichtung ein Mikrofon auf oder ist ein Mikrofon. Zusätzlich oder alternativ weist die Ausgabeeinrichtung einen Schallerzeuger und/oder eine Anzeige und/oder eine Vibrationseinrichtung auf oder ist ein Schallerzeuger und/oder eine Anzeige und/oder eine Vibrationseinrichtung. Insbesondere kann der Schallerzeuger einen Lautsprecher aufweisen oder sein. Die Anzeige kann an dem Schutzhelm und/oder dem Gesichtsschutz und/oder der Schutzbrille, soweit vorhanden, angeordnet sein. Die Anzeige kann auf Englisch als Head-mounted-Display bezeichnet werden. Insbesondere kann die Anzeige dazu ausgebildet sein, die Information auf einem Visier des Schutzhelms, des Gesichtsschutzes und/oder der Schutzbrille, soweit vorhanden, anzuzeigen oder in diese/s/n zu projizieren. Die Anzeige kann auf Englisch als Head-up-Display bezeichnet werden. Zusätzlich oder alternativ kann die Anzeige ein transluzentes Display aufweisen oder sein.

In einer Weiterbildung der Erfindung weist das System ein, insbesondere elektrisches, drahtloses beziehungsweise kabelloses Übertragungssystem auf, das dazu ausgebildet ist, die erfasste Spracheingabe und/oder die Information von der Erfassungseinrichtung und/oder von der Analyseeinrichtung an die Analyseeinrichtung und/oder an die Ausgabeeinrichtung drahtlos beziehungsweise kabellos zu übertragen, insbesondere von einem Erfassungsort an einen Ausgabeort. Insbesondere kann das Übertragungssystem dazu ausgebildet sein, mittels eines Funksignals zu übertragen, insbesondere eines Bluetooth-Signals und/oder eines WLAN-Signals und/oder eines Mobilfunk-Signals und/oder eines Satellitenfunk-Signals. Das Übertragungssystem kann als Funkübertragungssystem bezeichnet werden, insbesondere als Bluetooth-Übertragungssystem und/oder als WLAN-Übertragungssystem und/oder Mobilfunk-Übertragungssystem und/oder Satellitenfunk-Übertragungssystem. Zusätzlich können das Entfernungsermittlungssystem und das Übertragungssystem gemeinsam ausgebildet sein, insbesondere kann ein Übertragungssignal, insbesondere das Funksignal, zur Entfernungsermittlung, insbesondere mittels des Laufzeitverfahrens, soweit vorgesehen, verwendet beziehungsweise genutzt werden.

In einer Weiterbildung der Erfindung weist das System ein, insbesondere elektrisches, Richtungsermittlungssystem auf, das dazu ausgebildet ist, eine Richtung von der Ausgabeeinrichtung zu der Erfassungseinrichtung zu ermitteln. Die Information weist die ermittelte Richtung auf. Insbesondere kann das Richtungsermittlungssystem dazu ausgebildet sein, die Richtung von der Ausgabeeinrichtung zu der Erfassungseinrichtung mittels eines Kompasses und/oder mittels eines Funkfeuers und/oder aus einer Differenz von Positionskoordinaten der Erfassungseinrichtung und von Positionskoordinaten der Ausgabeeinrichtung zu ermitteln. Das Richtungsermittlungssystem kann mindestens ein lokales Positionsbestimmungssystem und/oder mindestens ein Satelliten-Positionsbestimmungssystems zum Ermitteln von Positionskoordinaten aufweisen. Zusätzlich können das Richtungsermittlungssystem und das Übertragungssystem, soweit vorhanden, gemeinsam ausgebildet sein, insbesondere kann ein Übertragungssignal, insbesondere das Funksignal, zur Richtungsermittlung verwendet beziehungsweise genutzt werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: ein erfindungsgemäßes System, und
- Fig. 3: ein Schutzhelm mit einem Gehörschutz des Systems von Fig. 2.

### DETAILLIERTE BESCHREIBUNG DER AUSFÜHRUNGSBEISPIELE

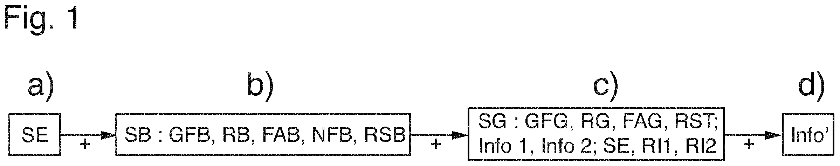

Fig. 1 zeigt ein erfindungsgemäßes Verfahren zum begriffsabhängigen Ausgeben einer auf einer Spracheingabe SE basierenden Information Info1, Info2 an eine spezifische Gruppe SG. Das Verfahren weist die Schritte auf: a) Erfassen der Spracheingabe SE. b) Analysieren der erfassten Spracheingabe SE auf Vorhandensein eines gruppenspezifischen Schlüsselbegriffs SB, welcher der spezifischen Gruppe SG zugeordnet ist. c) bei Erkennung des gruppenspezifischen Schlüsselbegriffs SB in der analysierten Spracheingabe SE Ausgeben der auf der Spracheingabe SE basierenden Information Info1, Info2 an die spezifische Gruppe SG.

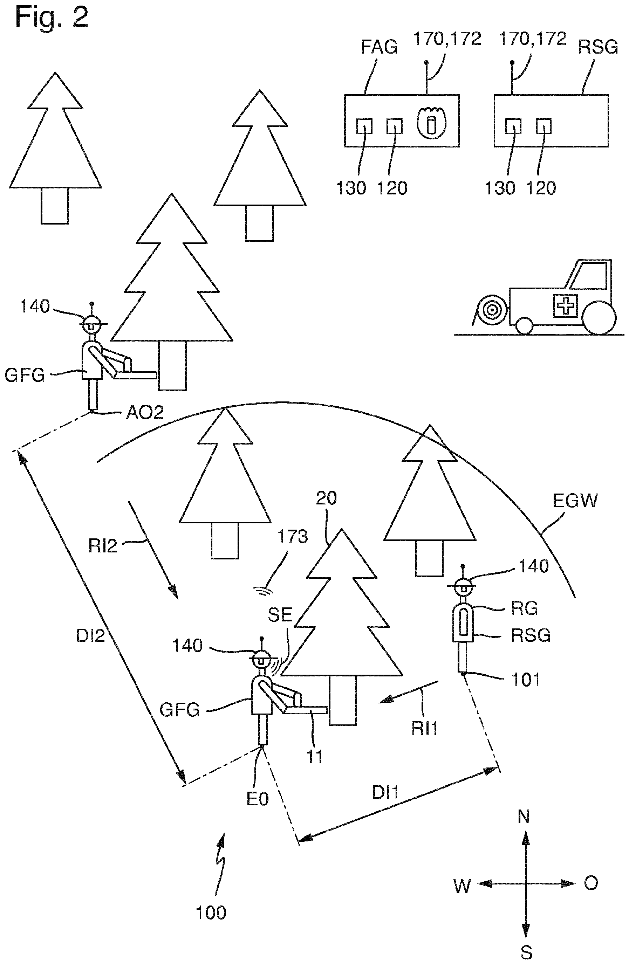

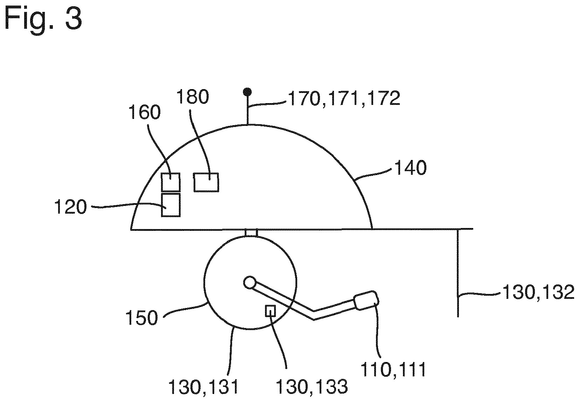

Fig. 2 und 3 zeigen ein erfindungsgemäßes System 100 zum begriffsabhängigen Ausgeben der auf der Spracheingabe SE basierenden Information Info1, Info2 an die spezifische Gruppe SG. Das System 100 weist mindestens eine Erfassungseinrichtung 110, mindestens eine Analyseeinrichtung 120 und mindestens eine Ausgabeeinrichtung 130 auf. Die mindestens eine Erfassungseinrichtung 110 ist dazu ausgebildet, die Spracheingabe SE zu erfassen. Die mindestens eine Analyseeinrichtung 120 ist dazu ausgebildet, die erfasste Spracheingabe SE auf Vorhandensein des gruppenspezifischen Schlüsselbegriffs SB zu analysieren, welcher der spezifischen Gruppe SG zugeordnet ist. Die mindestens eine Ausgabeeinrichtung 130 ist dazu ausgebildet, bei Erkennung des gruppenspezifischen Schlüsselbegriffs SB in der analysierten Spracheingabe SE die auf der Spracheingabe SE basierende Information Info1, Info2 an die spezifische Gruppe SG auszugeben.

Im Detail ist das System 100 zum Ausführen des oben beschriebenen Verfahrens ausgebildet.

In Fig. 2 sind mehrere verschiedene spezifische Gruppen SG gezeigt.

Im Detail ist eine der spezifischen Gruppen SG eine Garten- und/oder Forstarbeitergruppe GFG, insbesondere eine Fällgruppe. Der gruppenspezifische Schlüsselbegriff SB ist ein Garten- und/oder Forstbegriff GFB, insbesondere ein Fällbegriff.

Im gezeigten Ausführungsbeispiel weist die Garten- und/oder Forstarbeitergruppe GFG zwei Gruppenmitglieder auf. In alternativen Ausführungsbeispielen kann die spezifische Gruppe nur ein einziges Gruppenmitglied oder mehr als zwei Gruppenmitglieder aufweisen. Des Weiteren trägt im gezeigten Ausführungsbeispiel jedes der Gruppenmitglieder ein Garten- und/oder Forstgerät 11 in seinen Händen, insbesondere eine Kettensäge zur Fällung eines Baums 20.

Eine andere der spezifischen Gruppen SG ist eine Rückergruppe RG. Der gruppenspezifische Schlüsselbegriff SB ist ein Rückerbegriff RB.

Im gezeigten Ausführungsbeispiel weist die Rückergruppe RG nur ein einziges Gruppenmitglied in Form eines Fahrers eines Rückfahrzeugs auf. In alternativen Ausführungsbeispielen kann die spezifische Gruppe zwei oder mehr Gruppenmitglieder aufweisen.

Eine nochmals andere der spezifischen Gruppen SG ist eine Forst- und/oder Arbeitsverwaltungsgruppe FAG. Der gruppenspezifische Schlüsselbegriff SB ist ein Forst- und/oder Arbeitsverwaltungsbegriff FAB.

Im gezeigten Ausführungsbeispiel ist die Forst- und/oder Arbeitsverwaltungsgruppe FAG in Form einer Arbeitsverwaltungszentrale mit einem Cloudspeicher dargestellt.

Eine nochmals andere der spezifischen Gruppen SG ist eine Rettungsgruppe RSG. Der gruppenspezifische Schlüsselbegriff SB ist ein Notfallbegriff NFB und/oder ein Rettungsbegriff RSB.

Im gezeigten Ausführungsbeispiel weist die Rettungsgruppe RSG zwei Gruppenmitglieder in Form eines Ersthelfers und einer Notrufzentrale auf. In alternativen Ausführungsbeispielen kann die spezifische Gruppe nur ein einziges oder mehr als zwei Gruppenmitglieder aufweisen. Des Weiteren ist im gezeigten Ausführungsbeispiel der Fahrer des Rückfahrzeugs gleichzeitig der Ersthelfer. Anders formuliert: diese natürliche Person ist Mitglied in zwei Gruppen. In alternativen Ausführungsbeispielen können der Fahrer des Rückfahrzeugs und der Ersthelfer verschiedene Personen sein.

Im gezeigten Ausführungsbeispiel weist das System 100 eine Mehrzahl von Erfassungseinrichtungen 110 auf, im Detail drei. In alternativen Ausführungsbeispielen kann das System nur einer einzige, zwei, vier, fünf oder mehr als fünf Erfassungseinrichtungen aufweisen. Des Weiteren weist im gezeigten Ausführungsbeispiel das System 100 eine Mehrzahl von Analyseeinrichtungen 120 auf, im Detail fünf. In alternativen Ausführungsbeispielen kann das System nur einer einzige, zwei, drei, vier oder mehr als fünf Analyseeinrichtungen aufweisen. Außerdem weist im gezeigten Ausführungsbeispiel das System 100 eine Mehrzahl von Ausgabeeinrichtungen 130 auf, im Detail fünf. In alternativen Ausführungsbeispielen kann das System nur einer einzige, zwei, drei, vier oder mehr als fünf Ausgabeeinrichtungen aufweisen.

Weiter sind im gezeigten Ausführungsbeispiel mindestens ein Teil der Erfassungseinrichtungen 110, der Analyseeinrichtungen 120 und der Ausgabeeinrichtungen 130 mobil ausgebildet.

Im Detail weist das System 100 mindestens einen Schutzhelm 140 mit einem Gehörschutz 150 auf, im gezeigten Ausführungsbeispiel drei Schutzhelme 140 mit Gehörschützen 150. An dem Schutzhelm 140 beziehungsweise seinem Gehörschutz 150 sind eine der Erfassungseinrichtungen 110, eine der Analyseeinrichtungen 120 und eine der Ausgabeeinrichtungen 130 angeordnet beziehungsweise in den Schutzhelm 140 mit seinem Gehörschutz 150 integriert, wie in Fig. 3 gezeigt. In alternativen Ausführungsbeispielen kann das System mindestens einen Schutzhelm und/oder einen Gehörschutz und/oder einen Gesichtsschutz und/oder eine Schutzbrille und/oder einen Schutzhandschuh und/oder eine Smartwatch und/oder ein Armband und/oder einen Armreif und/oder ein Headset aufweisen, wobei die Erfassungseinrichtung und/oder die Analyseeinrichtung und/oder die Ausgabeeinrichtung an dem Schutzhelm und/oder dem Gehörschutz und/oder dem Gesichtsschutz und/oder der Schutzbrille und/oder dem Schutzhandschuh und/oder der Smartwatch und/oder dem Armband und/oder dem Armreif und/oder dem Headset angeordnet sein können/kann.

In Fig. 2 sind die Schutzhelme 140 mit den Gehörschützen 150 von den Gruppenmitgliedern der Garten- und/oder Forstarbeitergruppe GFG, der Rückergruppe RG und der Rettungsgruppe RSG beziehungsweise dem Fahrer des Rückfahrzeugs und Ersthelfer getragen.

Im Detail weist die Erfassungseinrichtung 110 ein Mikrofon 111 auf. Des Weiteren weist die Ausgabeeinrichtung 130 einen Schallerzeuger 131 in Form eines Lautsprechers, eine Anzeige 132 in Form eines Head-mounted-Displays, insbesondere eines Head-up-Displays, und eine Vibrationseinrichtung 133 auf. In alternativen Ausführungsbeispielen kann die Ausgabeeinrichtung entweder einen Schallerzeuger oder eine Anzeige oder eine Vibrationseinrichtung aufweisen.

Im Schritt c) wird die Information Info1, Info2 akustisch, insbesondere mittels des Schallerzeugers 131, und/oder optisch, insbesondere mittels der Anzeige 132, und/oder haptisch, insbesondere mittels der Vibrationseinrichtung 133, ausgegeben.

Des Weiteren weist das System 100 ein drahtloses Übertragungssystem 170 auf. Das drahtlose Übertragungssystem 170 ist dazu ausgebildet, die erfasste Spracheingabe SE von der Erfassungseinrichtung 110, insbesondere eines Mitglieds einer spezifischen Gruppe SG, an die Analyseeinrichtung 120 und/oder an die Ausgabeeinrichtung 130, insbesondere eines anderen Mitglieds einer, insbesondere der, spezifischen Gruppe SG, drahtlos zu übertragen.

Im gezeigten Ausführungsbeispiel weist das drahtlose Übertragungssystem 170 eine Mehrzahl von Sendern 171, insbesondere mit einer Antenne, auf, im Detail drei. In alternativen Ausführungsbeispielen kann das drahtlose Übertragungssystem nur einer einzige, zwei, vier, fünf oder mehr als fünf Erfassungseinrichtungen aufweisen. Des Weiteren weist im gezeigten Ausführungsbeispiel das drahtlose Übertragungssystem 170 eine Mehrzahl von Empfängern 172, insbesondere mit der Antenne, auf, im Detail fünf. In alternativen Ausführungsbeispielen kann das drahtlose Übertragungssystem nur einer einzige, zwei, drei, vier oder mehr als fünf Empfänger aufweisen.

Im Detail sind an dem Schutzhelm 140 beziehungsweise seinem Gehörschutz 150 einer der Sender 171 und einer der Empfänger 172 angeordnet beziehungsweise in den Schutzhelm 140 mit seinem Gehörschutz 150 integriert.

Das Verfahren weist den Schritt auf: drahtloses Übertragen der erfassten Spracheingabe SE, insbesondere von einem Mitglied einer spezifischen Gruppe SG an ein anderes Mitglied einer, insbesondere der, spezifischen Gruppe SG, insbesondere mittels des drahtlosen Übertragungssystems 170.

In alternativen Ausführungsbeispielen kann das drahtlose Übertragungssystem zusätzlich oder alternativ dazu ausgebildet sein, die Information von der Analyseeinrichtung, insbesondere eines Mitglieds, an die Ausgabeeinrichtung, eines anderen Mitglieds, drahtlos zu übertragen. Weiter zusätzlich oder alternativ kann in alternativen Ausführungsbeispielen das Verfahren den Schritt aufweisen: drahtloses Übertragen der Information, insbesondere von einem Mitglied an ein anderes Mitglied.

Im gezeigten Ausführungsbeispiel wird mittels eines Funksignals 173 übertragen beziehungsweise das Übertragungssystem ist dazu ausgebildet, mittels eines Funksignals 173 zu übertragen.

Außerdem weist das System 100 ein Entfernungsermittlungssystem 160 auf. Das Entfernungsermittlungssystem 160 ist dazu ausgebildet, eine Entfernung DI1, DI2 zwischen der Erfassungseinrichtung 110 und der Ausgabeeinrichtung 130 zu ermitteln. Die Ausgabeeinrichtung 130 ist dazu ausgebildet, bei Unterschreitung eines Entfernungsgrenzwerts EGW durch die ermittelte Entfernung DI1 die Information Info1 gruppenunspezifisch auszugeben.

Im gezeigten Ausführungsbeispiel weist das System 100 eine Mehrzahl von Entfernungsermittlungssystemen 160 auf, im Detail drei. In alternativen Ausführungsbeispielen kann das System nur ein einziges, zwei, vier, fünf oder mehr als fünf Entfernungsermittlungssysteme aufweisen.

Im Detail ist an dem Schutzhelm 140 beziehungsweise seinem Gehörschutz 150 eines der Entfernungsermittlungssysteme 160 angeordnet beziehungsweise in den Schutzhelm 140 mit seinem Gehörschutz 150 integriert.

Das Verfahren weist die Schritte auf: Ermitteln der Entfernung DI1, DI2 zwischen einem Erfassungsort EO und einem Ausgabeort AO1, AO2, insbesondere mittels des Entfernungsermittlungssystems 160. Bei Unterschreitung des Entfernungsgrenzwerts EGW durch die ermittelte Entfernung DI1 gruppenunspezifisches Ausgeben der Information Info1.

Im gezeigten Ausführungsbeispiel wird die Entfernung DI1, DI2, mittels eines Laufzeitverfahrens, insbesondere einer Laufzeitmessung des Funksignals 173, ermittelt beziehungsweise das Entfernungsermittlungssystem 160 ist dazu ausgebildet, die Entfernung DI1, DI2 zwischen der Erfassungseinrichtung 110 und der Ausgabeeinrichtung 130 mittels des Laufzeitverfahrens, insbesondere der Laufzeitmessung des Funksignals 173, zu ermitteln.

Im Detail liegt der Entfernungsgrenzwert EGW in einem Bereich von 30 m bis 150 m, insbesondere ist der Entfernungsgrenzwert EGW 50 m.

Weiter weist das System 100 ein Richtungsermittlungssystem 180 auf. Das Richtungsermittlungssystem 180 ist dazu ausgebildet, eine Richtung RI1, RI2 von der Ausgabeeinrichtung 130 zu der Erfassungseinrichtung 110 zu ermitteln. Die Information Info1, Info2 weist die ermittelte Richtung RI1, RI2 auf.

Im gezeigten Ausführungsbeispiel weist das System 100 eine Mehrzahl von Richtungsermittlungssystemen 180 auf, im Detail drei. In alternativen Ausführungsbeispielen kann das System nur ein einziges, zwei, vier, fünf oder mehr als fünf Richtungsermittlungssysteme aufweisen.

Im Detail ist an dem Schutzhelm 140 beziehungsweise seinem Gehörschutz 150 eines der Richtungsermittlungssysteme 180 angeordnet beziehungsweise in den Schutzhelm 140 mit seinem Gehörschutz 150 integriert.

Das Verfahren weist den Schritt auf: Ermitteln der Richtung RI1, RI2 von dem Ausgabeort AO1, AO2 zu dem Erfassungsort EO. Die Information Info1, Info2 weist die ermittelte Richtung RI1, RI2 auf.

Zudem weist das Verfahren den Schritt auf: d) Ausgeben einer auf der ausgegeben Information Info1, Info 2 basierenden weiteren Information Info' an einen Sprecher der Spracheingabe SE und/oder an einem, insbesondere dem, Erfassungsort EO.

Im gezeigten Ausführungsbeispiel spricht eines der Mitglieder der Garten- und/oder Forstarbeitergruppe GFG die Spracheingabe SE mit dem gruppenspezifischen Schlüsselbegriff SB beziehungsweise dem Garten- und/oder Forstbegriff GFB "Baum fällt" gleichzeitig mit beziehungsweise während der Fällung des Baums 20.

Die Spracheingabe SE wird erfasst, insbesondere am Erfassungsort EO.

Die erfasste Spracheingabe SE wird zu, insbesondere möglichen, Ausgabeorten AO1, AO2 drahtlos übertragen.

Das andere Mitglied der Garten- und/oder Forstarbeitergruppe GFG beziehungsweise sein Ausgabeort AO2 ist weiter als der Entfernungsgrenzwert EGW von dem Erfassungsort EO entfernt. Daher wird dort die, insbesondere empfangene, Spracheingabe SE analysiert.

Der gruppenspezifische Schlüsselbegriff SB beziehungsweise der Garten- und/oder Forstbegriff GFB "Baum fällt" wird erkannt.

Somit wird die auf der Spracheingabe SE basierende Information Info2 an die spezifische Gruppe SG beziehungsweise die Garten- und/oder Forstarbeitergruppe GFG ausgegeben, insbesondere an das andere Mitglied der Garten- und/oder Forstarbeitergruppe GFG.

Im Detail weist die Information Info2 die Spracheingabe SE selbst auf. Zusätzlich wird die Information Info2 beziehungsweise die Spracheingabe SE mit dem Wort "Warnung" ergänzt. Weiter zusätzlich wird die Richtung RI2 von dem Ausgabeort AO2 zu dem Erfassungsort EO ermittelt und die Information Info2 weist die ermittelte Richtung RI2 auf, im gezeigten Ausführungsbeispiel die Himmelsrichtung "Süd-Süd-Ost".

Insbesondere wird das andere Mitglied der Garten- und/oder Forstarbeitergruppe GFG haptisch darauf aufmerksam gemacht, dass die Information Info2 ausgegeben wird. Die Information Info2 wird akustisch ausgegeben. Des Weiteren wird die Information Info2 optisch ausgegeben, insbesondere werden in das Sichtfeld des anderen Mitglieds der Garten- und/oder Forstarbeitergruppe GFG die Worte "Baum Fällt, Warnung!" und ein Pfeil, der in Richtung RI2 des Erfassungsorts EO beziehungsweise des Baums 20 zeigt, eingeblendet.

Die Forst- und/oder Arbeitsverwaltungsgruppe FAG beziehungsweise die Arbeitsverwaltungszentrale ist weiter als der Entfernungsgrenzwert EGW von dem Erfassungsort EO entfernt. Daher wird dort die, insbesondere empfangene, Spracheingabe SE analysiert.

Da in der Spracheingabe SE kein Forst- und/oder Arbeitsverwaltungsbegriff vorhanden ist und somit nicht erkannt wird, wird keine Information an die Forst- und/oder Arbeitsverwaltungsgruppe FAG beziehungsweise in der Arbeitsverwaltungszentrale ausgegeben.

Die Notrufzentrale ist weiter als der Entfernungsgrenzwert EGW von dem Erfassungsort EO entfernt. Daher wird dort die, insbesondere empfangene, Spracheingabe SE analysiert.

Da in der Spracheingabe SE kein Notfallbegriff und kein Rettungsbegriff vorhanden sind und somit nicht erkannt werden, wird keine Information in der Notrufzentrale ausgegeben.

Der Ersthelfer beziehungsweise der Fahrer des Rückfahrzeugs beziehungsweise sein Ausgabeort AO1 ist weniger als der Entfernungsgrenzwert EGW von dem Erfassungsort EO entfernt. Daher wird dort die Information Info1 an diesen gruppenunspezifisch ausgegeben.

Im Detail weist die Information Info1 die Spracheingabe SE selbst auf. Zusätzlich wird die Information Info1 beziehungsweise die Spracheingabe SE mit dem Wort "Warnung" ergänzt. Weiter zusätzlich wird die Richtung RI1 von dem Ausgabeort AO1 zu dem Erfassungsort EO ermittelt und die Information Info1 weist die ermittelte Richtung RI1 auf, im gezeigten Ausführungsbeispiel die Himmelsrichtung "Süd-West".

Insbesondere wird der Ersthelfer beziehungsweise der Fahrer des Rückfahrzeugs haptisch darauf aufmerksam gemacht, dass die Information Info1 ausgegeben wird. Die Information Info1 wird akustisch ausgegeben. Des Weiteren wird die Information Info1 optisch ausgegeben, insbesondere werden in das Sichtfeld des Ersthelfers beziehungsweise des Fahrers des Rückfahrzeugs die Worte "Baum Fällt, Warnung!" und ein Pfeil, der in Richtung RI1 des Erfassungsorts EO beziehungsweise des Baums 20 zeigt, eingeblendet.

Im gezeigten Ausführungsbeispiel wird zuerst die Entfernung ermittelt und dann, wenn überhaupt, wird die Spracheingabe analysiert. In alternativen Ausführungsbeispielen kann zuerst die Spracheingabe analysiert werden und dann, wenn überhaupt, kann die Entfernung ermittelt werden. In weiteren alternativen Ausführungsbeispielen braucht oder kann die Entfernung nicht ermittelt werden.

Wie die gezeigten und oben erläuterten Ausführungsbeispiele deutlich machen, stellt die Erfindung ein Verfahren zum begriffsabhängigen Ausgeben einer auf einer Spracheingabe basierenden Information an eine spezifische Gruppe und ein System zum begriffsabhängigen Ausgeben einer auf einer Spracheingabe basierenden Information an eine spezifische Gruppe bereit, das jeweils verbesserte Eigenschaften aufweist, insbesondere mehr Funktionalitäten und somit benutzerfreundlich ist.

## Patentansprüche

1. Verfahren zum begriffsabhängigen Ausgeben einer auf einer Spracheingabe (SE) basierenden Information (Info1, Info2) an eine spezifische Gruppe (SG),
wobei das Verfahren die Schritte aufweist:
a) Erfassen der Spracheingabe (SE),
b) Analysieren der erfassten Spracheingabe (SE) auf Vorhandensein eines gruppenspezifischen Schlüsselbegriffs (SB), welcher der spezifischen Gruppe (SG) zugeordnet ist, und
c) bei Erkennung des gruppenspezifischen Schlüsselbegriffs (SB) in der analysierten Spracheingabe (SE) Ausgeben der auf der Spracheingabe (SE) basierenden Information (Info1, Info2) an die spezifische Gruppe (SG), und
wobei das Verfahren durch folgende Schritte gekennzeichnet ist:
- Ermitteln einer Entfernung (DI1, DI2) zwischen einem Erfassungsort (EO) und einem Ausgabeort (AO1, AO2) und
- bei Unterschreitung eines Entfernungsgrenzwerts (EGW) durch die ermittelte Entfernung (DI1) gruppenunspezifisches Ausgeben der Information (Info1),
- wobei der Entfernungsgrenzwert in einem Bereich von 30 m bis 150 m liegt.

2. Verfahren nach Anspruch 1,
- wobei die spezifische Gruppe (SG) eine Garten- und/oder Forstarbeitergruppe (GFG) ist, insbesondere eine Fällgruppe, und wobei der gruppenspezifische Schlüsselbegriff (SB) ein Garten- und/oder Forstbegriff (GFB) ist, insbesondere ein Fällbegriff, und/oder
- wobei die spezifische Gruppe (SG) eine Rückergruppe (RG) ist und wobei der gruppenspezifische Schlüsselbegriff (SB) ein Rückerbegriff (RB) ist, und/oder
- wobei die spezifische Gruppe (SG) eine Forst- und/oder Arbeitsverwaltungsgruppe (FAG) ist und wobei der gruppenspezifische Schlüsselbegriff (SB) ein Forst- und/oder Arbeitsverwaltungsbegriff (FAB) ist, und/oder
- wobei die spezifische Gruppe (SG) eine Rettungsgruppe (RSG) ist und wobei der gruppenspezifische Schlüsselbegriff (SB) ein Notfallbegriff (NFB) und/oder ein Rettungsbegriff (RSB) ist.

3. Verfahren nach einem der vorhergehenden Ansprüche,
- wobei das Verfahren den Schritt aufweist: Ermitteln einer Richtung (RI1, R12) von einem Ausgabeort (AO1, AO2) zu einem Erfassungsort (EO) und
- wobei die Information (Info1, Info2) die ermittelte Richtung (RI1, R12) aufweist.

4. Verfahren nach einem der vorhergehenden Ansprüche,
- wobei die Entfernung (DI1, DI2) mittels eines Laufzeitverfahrens ermittelt wird.

5. Verfahren nach einem der vorhergehenden Ansprüche, wobei das Verfahren den Schritt aufweist:
- drahtloses Übertragen der erfassten Spracheingabe (SE) und/oder der Information (Info1, Info2).

6. Verfahren nach einem der vorhergehenden Ansprüche,
- wobei im Schritt c) die Information (Info1, Info2) akustisch und/oder optisch und/oder haptisch ausgegeben wird.

7. Verfahren nach einem der vorhergehenden Ansprüche, wobei das Verfahren den Schritt aufweist:
- d) Ausgeben einer auf der ausgegeben Information (Info1, Info2) basierenden weiteren Information (Info') an einen Sprecher der Spracheingabe (SE) und/oder an einem Erfassungsort (EO).

8. System (100) zum begriffsabhängigen Ausgeben einer auf einer Spracheingabe (SE) basierenden Information (Info1, Info2) an eine spezifische Gruppe (SG), wobei das System (100) aufweist:
- mindestens eine Erfassungseinrichtung (110), die dazu ausgebildet ist, die Spracheingabe (SE) zu erfassen,
- mindestens eine Analyseeinrichtung (120), die dazu ausgebildet ist, die erfasste Spracheingabe (SE) auf Vorhandensein eines gruppenspezifischen Schlüsselbegriffs (SB) zu analysieren, welcher der spezifischen Gruppe (SG) zugeordnet ist,
- mindestens eine Ausgabeeinrichtung (130), die dazu ausgebildet ist, bei Erkennung des gruppenspezifischen Schlüsselbegriffs (SB) in der analysierten Spracheingabe (SE) die auf der Spracheingabe (SE) basierende Information (Info1, Info2) an die spezifische Gruppe (SG) auszugeben, und das System ist durch folgende Merkmale gekennzeichnet:
- ein Entfernungsermittlungssystem (160), das dazu ausgebildet ist, eine Entfernung (011, DI2) zwischen der Erfassungseinrichtung (110) und der Ausgabeeinrichtung (130) zu ermitteln, und
- wobei die Ausgabeeinrichtung (130) dazu ausgebildet ist, bei Unterschreitung eines Entfernungsgrenzwerts (EGW) durch die ermittelte Entfernung (DI1) die Information (Info1) gruppenunspezifisch auszugeben,
- wobei der Entfernungsgrenzwert in einem Bereich von 30 m bis 150 m liegt.

9. System (100) nach Anspruch 8,
- wobei die Erfassungseinrichtung (110) und/oder die Analyseeinrichtung (120) und/oder die Ausgabeeinrichtung (130) mobil ausgebildet sind/ist.

10. System (100) nach Anspruch 9, aufweisend:
- mindestens einen Schutzhelm (140) und/oder einen Gehörschutz (150) und/oder einen Gesichtsschutz und/oder eine Schutzbrille und/oder einen Schutzhandschuh und/oder eine Smartwatch und/oder ein Armband und/oder einen Armreif und/oder ein Headset,
- wobei die Erfassungseinrichtung (110) und/oder die Analyseeinrichtung (120) und/oder die Ausgabeeinrichtung (130) an dem Schutzhelm (140) und/oder dem Gehörschutz (150) und/oder dem Gesichtsschutz und/oder der Schutzbrille und/oder dem Schutzhandschuh und/oder der Smartwatch und/oder dem Armband und/oder dem Armreif und/oder dem Headset angeordnet sind/ist.

11. System (100) nach einem der Ansprüche 8 bis 10,
- wobei die Erfassungseinrichtung (110) ein Mikrofon (111) aufweist und/oder
- wobei die Ausgabeeinrichtung (130) einen Schallerzeuger (131) und/oder eine Anzeige (132) und/oder eine Vibrationseinrichtung (133) aufweist.

12. System (100) nach einem der vorhergehenden Ansprüche 8 bis 11, aufweisend:
- ein drahtloses Übertragungssystem (170), das dazu ausgebildet ist, die erfasste Spracheingabe (SE) und/oder die Information (Info1, Info2) von der Erfassungseinrichtung (110) und/oder von der Analyseeinrichtung (120) an die Analyseeinrichtung (120) und/oder an die Ausgabeeinrichtung (130) drahtlos zu übertragen.

13. System (100) nach einem der vorhergehenden Ansprüche 8 bis 12, aufweisend:
- ein Richtungsermittlungssystem (180), das dazu ausgebildet ist, eine Richtung (RI1, R12) von der Ausgabeeinrichtung (130) zu der Erfassungseinrichtung (110) zu ermitteln, und
- wobei die Information (Info1, Info2) die ermittelte Richtung (RI1, R12) aufweist.

## Claims

1. Method for term-dependent output of information (Info1, Info2) based on a voice input (SE) to a specific group (SG),
wherein the method has the steps of:
a) capturing the voice input (SE),
b) analysing the captured voice input (SE) for the presence of a group-specific key term (SB), associated with the specific group (SG), and
c) on detection of the group-specific key term (SB) in the analysed voice input (SE), outputting the information (Info1, Info2) based on the voice input (SE) to the specific group (SG), and
wherein the method is **characterised by** the following steps of:
- ascertaining a distance (DI1, DI2) between a capture location (EO) and an output location (A01, A02), and
- if the ascertained distance (DI1) is below a distance limit value (EGW), outputting the information (Info1) in group-aspecific fashion,
- wherein the distance limit value is in a range from 30 m to 150 m.

2. Method according to claim 1,
- wherein the specific group (SG) is a garden and/or forestry worker group (GFG), in particular a felling group, and wherein the group-specific key term (SB) is a garden and/or forestry term (GFB), in particular a felling term, and/or
- wherein the specific group (SG) is a hauler group (RG), and wherein the group-specific key term (SB) is a hauler term (RB), and/or
- wherein the specific group (SG) is a forestry and/or work management group (FAG), and wherein the group-specific key term (SB) is a forestry and/or work management term (FAB), and/or
- wherein the specific group (SG) is a rescue group (RSG), and wherein the group-specific key term (SB) is an emergency term (NFB) and/or a rescue term (RSB).

3. Method according to either of the preceding claims,
- wherein the method has the step of: ascertaining a direction (RI1, RI2) from an output location (A01, AO2) to a capture location (EO), and
- wherein the information (Info1, Info2) has the ascertained direction (RI1, RI2).

4. Method according to one of the preceding claims,
- wherein the distance (DI1, DI2) is ascertained by means of a time-of-flight method.

5. Method according to one of the preceding claims, wherein the method has the step of:
- wirelessly transmitting the captured voice input (SE) and/or the information (Info1, Info2).

6. Method according to one of the preceding claims,
- wherein step c) involves the information (Info1, Info2) being output audibly and/or visually and/or haptically.

7. Method according to one of the preceding claims, wherein the method has the step of:
- d) outputting further information (Info') based on the output information (Info1, Info2) to a speaker of the voice input (SE) and/or at a capture location (EO).

8. System (100) for term-dependent output of information (Info1, Info2) based on a voice input (SE) to a specific group (SG), wherein the system (100) has:
- at least one capture device (110), designed to capture the voice input (SE),
- at least one analysis device (120), designed to analyse the captured voice input (SE) for the presence of a group-specific key term (SB) associated with the specific group (SG),
- at least one output device (130), designed so as, on detection of the group-specific key term (SB) in the analysed voice input (SE), to output the information (Info1, Info2) based on the voice input (SE) to the specific group (SG), and
the system is **characterised by** the following features of:
- a distance ascertainment system (160), designed to ascertain a distance (DI1, DI2) between the capture device (110) and the output device (130), and
- wherein the output device (130) is designed so as, if the ascertained distance (DI1) is below a distance limit value (EGW), to output the information (Info1) in group-aspecific fashion,
- wherein the distance limit value is in a range from 30 m to 150 m.

9. System (100) according to claim 8,
- wherein the capture device (110) and/or the analysis device (120) and/or the output device (130) is/are in mobile form.

10. System (100) according to claim 9, having:
- at least one safety helmet (140) and/or ear protection (150) and/or face protection and/or safety goggles and/or a protective glove and/or a smart watch and/or a bracelet and/or a bangle and/or a headset,
- wherein the capture device (110) and/or the analysis device (120) and/or the output device (130) is/are arranged on the safety helmet (140) and/or the ear protection (150) and/or the face protection and/or the safety goggles and/or the protective glove and/or the smart watch and/or the bracelet and/or the bangle and/or the headset.

11. System (100) according to one of claims 8 to 10,
- wherein the capture device (110) has a microphone (111), and/or
- wherein the output device (130) has a sound generator (131) and/or a display (132) and/or a vibration device (133).

12. System (100) according to one of the preceding claims 8 to 11, having:
- a wireless transmission system (170), designed to wirelessly transmit the captured voice input (SE) and/or the information (Info1, Info2) from the capture device (110) and/or from the analysis device (120) to the analysis device (120) and/or to the output device (130).

13. System (100) according to one of the preceding claims 8 to 12, having:
- a direction ascertainment system (180), designed to ascertain a direction (RI1, RI2) from the output device (130) to the capture device (110), and
- wherein the information (Info1, Info2) has the ascertained direction (RI1, RI2).

## Revendications

1. Procédé de fourniture, en fonction d'un terme, d'une information (Info1, Info2) basée sur une entrée vocale (SE) à un groupe spécifique (SG),
dans lequel le procédé comprend les étapes suivantes :
a) détecter l'entrée vocale (SE),
b) analyser l'entrée vocale (SE) détectée pour y détecter la présence d'un terme clé (SB) spécifique au groupe, qui est associé au groupe spécifique (SG), et
c) en cas de reconnaissance du terme clé (SB) spécifique au groupe dans l'entrée vocale (SE) analysée, fournir l'information (Info1, Info2) basée sur l'entrée vocale (SE) au groupe spécifique (SG), et
dans lequel le procédé est **caractérisé par** les étapes suivantes :
- déterminer une distance (DI1, DI2) entre un emplacement de détection (EO) et un emplacement de fourniture (A01, AO2) et
- lorsque la distance déterminée (DI1) est inférieure à une valeur limite de distance (EGW), fournir de manière non spécifique au groupe l'information (Info1),
- dans lequel la valeur limite de distance est comprise dans une plage de 30 m à 150 m.

2. Procédé selon la revendication 1,
- dans lequel le groupe spécifique (SG) est un groupe de jardiniers et/ou de forestiers (GFG), en particulier un groupe d'abattage, et dans lequel le terme clé spécifique au groupe (SB) est un terme de jardinier et/ou de forestier (GFB), en particulier un terme d'abattage, et/ou
- dans lequel le groupe spécifique (SG) est un groupe de débardage (RG) et dans lequel le terme clé spécifique au groupe (SB) est un terme de débardage (RB), et/ou
- dans lequel le groupe spécifique (SG) est un groupe de gestion forestière et/ou de travail (FAG) et dans lequel le terme clé spécifique au groupe (SB) est un terme de gestion forestière et/ou de travail (FAB), et/ou
- dans lequel le groupe spécifique (SG) est un groupe de sauvetage (RSG) et dans lequel le terme clé spécifique au groupe (SB) est un terme d'urgence (NFB) et/ou un terme de sauvetage (RSB).

3. Procédé selon l'une quelconque des revendications précédentes,
- dans lequel le procédé comprend l'étape consistant à : déterminer une direction (RI1, RI2) allant d'un emplacement de fourniture (A01, AO2) à un emplacement de détection (EO) et
- dans lequel l'information (Info1, Info2) comprend la direction déterminée (RI1, R12).

4. Procédé selon l'une quelconque des revendications précédentes,
- dans lequel la distance (DI1, DI2) est déterminée au moyen d'un procédé de temps de propagation.

5. Procédé selon l'une quelconque des revendications précédentes, dans lequel le procédé comprend l'étape suivante :
- transmettre sans fil l'entrée vocale détectée (SE) et/ou l'information (Info1, Info2).

6. Procédé selon l'une quelconque des revendications précédentes,
- dans lequel, à l'étape c), l'information (Info1, Info2) est fournie de manière acoustique et/ou optique et/ou haptique.

7. Procédé selon l'une quelconque des revendications précédentes, dans lequel le procédé comprend l'étape suivante :
- d) fournir une autre information (Info') basée sur l'information fournie (Info1, Info2) à un locuteur de l'entrée vocale (SE) et/ou à un emplacement de détection (EO) .

8. Système (100) de fourniture, en fonction d'un terme, d'une information (Info1, Info2) basée sur une entrée vocale (SE) à un groupe spécifique (SG), dans lequel le système (100) comporte :
- au moins un dispositif de détection (110) qui est conçu pour détecter l'entrée vocale (SE),
- au moins un dispositif d'analyse (120) qui est conçu pour analyser l'entrée vocale (SE) détectée pour y détecter la présence d'un terme clé (SB) spécifique au groupe, qui est associé au groupe spécifique (SG),
- au moins un dispositif de fourniture (130) qui est conçu pour fournir au groupe spécifique (SG) l'information (Info1, Info2) basée sur l'entrée vocale (SE) lorsque le terme clé (SB) spécifique au groupe est reconnu dans l'entrée vocale (SE) analysée, et le système étant **caractérisé par** les éléments caractéristiques suivants :
- un système de détermination de distance (160) qui est conçu pour déterminer une distance (DI1, DI2) entre le dispositif de détection (110) et le dispositif de fourniture (130), et
- dans lequel le dispositif de fourniture (130) est conçu pour fournir de manière non spécifique au groupe l'information (Info1) lorsque la distance (DI1) déterminée est inférieure à une valeur limite de distance (EGW),
- dans lequel la valeur limite de distance est comprise dans une plage de 30 m à 150 m.

9. Système (100) selon la revendication 8,
- dans lequel le dispositif de détection (110) et/ou le dispositif d'analyse (120) et/ou le dispositif de fourniture (130) est/sont réalisés de manière mobile.

10. Système (100) selon la revendication 9, comportant :
- au moins un casque de protection (140) et/ou une protection auditive (150) et/ou une protection faciale et/ou des lunettes de protection et/ou un gant de protection et/ou une montre intelligente et/ou un bracelet et/ou un brassard et/ou un microcasque,
- dans lequel le dispositif de détection (110) et/ou le dispositif d'analyse (120) et/ou le dispositif de fourniture (130) sont agencés sur le casque de protection (140) et/ou la protection auditive (150) et/ou la protection faciale et/ou les lunettes de protection et/ou le gant de protection et/ou la montre intelligente et/ou le bracelet et/ou le brassard et/ou le microcasque.

11. Système (100) selon l'une quelconque des revendications 8 à 10,
- dans lequel le dispositif de détection (110) comporte un microphone (111) et/ou
- dans lequel le dispositif de fourniture (130) comprend un générateur de sons (131) et/ou un afficheur (132) et/ou un dispositif vibrant (133).

12. Système (100) selon l'une quelconque des revendications 8 à 11 précédentes, comportant :
- un système de transmission sans fil (170) qui est conçu pour transmettre sans fil l'entrée vocale (SE) et/ou l'information (Info1, Info2) détectée du dispositif de détection (110) et/ou du dispositif d'analyse (120) au dispositif d'analyse (120) et/ou au dispositif de fourniture (130).

13. Système (100) selon l'une quelconque des revendications précédentes 8 à 12, comportant :
- un système de détermination de direction (180) qui est conçu pour déterminer une direction (RI1, RI2) allant du dispositif de fourniture (130) au dispositif de détection (110), et
- dans lequel l'information (Info1, Info2) comprend la direction déterminée (RI1, RI2).
